# EUROPEAN PATENT APPLICATION

(11) **EP 4 734 079 A1**
(43) Date of publication of application: **29.04.2026**
(21) Application number: 24208977.9
(22) Date of filing: 25.10.2024
(51) Int. Cl.: G07C 1/30, G07B 15/02

(54) **A DISTRIBUTED SYSTEM FOR CENTRAL REGISTRATION AND RETRIEVAL OF PARKING TIMES OF VEHICLES**

(71) Applicant: Saphe A/S, 9000 Aalborg (DK)
(72) Inventor: SØRENSEN, Freddy, 9000 Aalborg (DK)
(74) Representative: Patrade A/S

(57) **Abstract**

The present invention relates to a distributed system (1) for central registration and retrieval of the time of parking (22) of a plurality of vehicles (20) with associated vehicle IDs (21), wherein the distributed system comprises:
- a remote server (30) configured to store the time of parking (22) of the vehicle (20) and the vehicle ID (21) associated with the vehicle (20);
- a vehicle module (10) configured to automatically generate the time of parking (22) and transmit the time of parking and the vehicle ID to the remote server (30) when the vehicle (20) is parked; and
- a scanner (50) configured to receive and display the time of parking (22) received from the remote server (30) by scanning a license plate (25) of a vehicle (20) and transmitting the license plate to the remote server (30).

## Description

### Field of the Invention

The present invention relates to a distributed system for central registration and retrieval of a time of parking of a plurality of vehicles with associated vehicle IDs.

### Background of the Invention

In modern car parks owned and/or run by a parking operator, parking is generally registered by registering a vehicle's license plate at an automat, through a mobile application or by being scanned at a gate wherein payment is generally collected upon entering or leaving the car park. As such, the parking enforcement officers can scan the license plate with a mobile phone to check whether the vehicle has been registered and/or whether the parking is being paid for, e.g. through a subscription or membership.

In parking zones where parking is generally free but limited to a certain parking period, it is required that a parking enforcement officer manually takes readings of each vehicle's specific time of parking in order to calculate if the vehicle exceeds the legal parking period at each location. Manually reading a vehicle's specific time of parking is cumbersome because the parking enforcement officer needs to walk around each vehicle and manually read the parking disc and then calculate the parking period. This time consumption is further increased because the parked cars are evenly distributed between forward and backward parking, so the readings cannot be made by walking along a straight line. Additionally, the time consumption may be increased due to weather conditions, where e.g. the windscreen is foggy and/or covered by snow. Furthermore, the parking enforcement officer is required to remember the parking period limits for each parking location and to manually calculate the parking period for each vehicle when assessing the parking discs.

Parking discs are also disadvantageous because the vehicle operator may forget to set the correct time of parking or may erroneously set a wrong time of parking when using manual parking discs. Electronic parking discs alleviate these disadvantages to some extent. However, the electronic parking discs are prone to loss of battery, lack of solar charging, and/or an erroneous time synchronization which will incur a parking ticket although the vehicle's parking period may be within the legal parking period.

### Object of the Invention

One objective of the present disclosure is to achieve a distributed system for automatic central registration of a time of parking of a plurality of vehicles and wherein the system comprises at least means for central registration of the time of parking and for retrieval of the time of parking of a particular vehicle.

A further objective is to solve the aforementioned problems related to the manual parking discs and electronic parking discs.

### Description of the Invention

One objective of the invention is achieved by a vehicle module for central registration of a time of parking of a vehicle with an associated vehicle ID on a remote server, wherein the vehicle module comprises:
- a timer configured to transmit data relating to the time of parking;
- a sensor configured to detect a status of the vehicle, the status being moving or stationary, and the sensor is configured to transmit the detected status;
- a controller with a processor and data storage medium wherein the controller is configured to store the vehicle ID and configured to receive the transmitted data from the timer, to receive the detected status from the sensor and to generate parking data based on the received data and a change of status from moving to stationary, and
- a communication module configured to transmit the generated parking data and the vehicle ID to a remote server,
wherein said parking data being a moment of time of parking or a time interval since parking.

In one aspect, the timer may be configured to count the time by counting seconds continuously. The time counted is used to track the time interval which has passed since the vehicle became stationary, this tracked time is used to generate the time interval since parking. The time interval since parking continues to be increased until the communication module is able to transmit the parking data and the vehicle ID to the remote server. This ensures that the remote server receives the most up-to-date (accurate) time of parking (being the time interval since parking) as possible. One advantage of only tracking the time interval since parking is that the timer is simple as it only needs to count seconds, minutes and/or hours continuously. Furthermore, because parking period limits are generally no more than 24 hours, the maximum number which the timer needs to be capable of counting to is easily achievable with even a limited memory capacity and battery capacity.

In one aspect, when the remote server receives the parking data, it may calculate the exact moment in time at which the vehicle was parked by subtracting the time interval since parking from the time of receiving the transmitted parking data. Optionally, the remote server may round off the exact moment in time at which the vehicle was parked to the nearest five-, fifteen or thirty-minute interval.

In another aspect, the moment of time of parking is an exact time of day of which the vehicle has the status of being a stationary vehicle. One advantage of transmitting the moment of time of parking in the parking data is that the remote server does not need to calculate the exact moment in time at which the vehicle was parked. This may avoid errors which may occur due to a delayed transmission of the parking data.

One advantage of the vehicle module having a vehicle ID associated with the vehicle stored on the controller and/or the storage medium is that the vehicle ID may be anonymous so that the data transmitted from the vehicle module to the remote server is entirely anonymous and hence the vehicle cannot be identified by obtaining the vehicle ID, as only the remote server is configured to store a list associating a plurality of vehicle IDs with the respective license plates or registration numbers of each vehicle. Hence, the central registration of the time of parking may be compliant with data privacy protection policies.

In one aspect the sensor may comprise one or more accelerometers configured to detect one or more accelerations of the vehicle. E.g., one or more accelerations of the vehicle may be due to forward, backward and/or sideways movement of the vehicle. Another set of accelerations of the vehicle may be due to small vibrations of the engine and/or wheels or tires occurring during movement of the vehicle. The sensor may be configured to use readings of the one or more accelerometers to determine whether the vehicle is moving or stationary.

In another aspect, the sensor may be one or more sensors known in the art of electronic parking discs, such as e.g., WO2004114225A1 or WO2009155933A1. Generally, the requirement of the sensor may be to only output whether the vehicle is stationary or moving.

In one aspect, the vehicle module may be powered by a battery and be configured to save energy in order to achieve a long battery life. Hence, the controller may be put in an idle state where it awaits a sensor reading of the vehicle being stationary. As the controller receives a status of the vehicle being stationary, the controller proceeds to generate the parking data. Then, the communication module proceeds to transmit the parking data and vehicle ID to the remote server. If the transmission is unsuccessful, the communication module will repeat the transmission periodically in a low-energy transmission mode until a successful transmission is achieved. Once the communication module has made a successful transmission, the vehicle module may enter another idle state wherein the controller awaits a sensor reading of the vehicle being in motion, so that the loop of automatically detecting the time of parking may be repeated.

In another aspect, the communication module is configured to await transmission if e.g. the first or the five first transmission attempts are unsuccessful. Instead, the communication module may be configured to await being in contact with a smartphone, wherein the smartphone is configured to relay the transmission of the parking data and vehicle ID to the remote server. Contact between the communication module and a smartphone may be through a low-energy Bluetooth connection or any similar communication protocols.

In a further aspect, the vehicle module may be configured to transmit the parking data and the vehicle ID to the remote server by being provided with an internet hotspot, wherein the internet hotspot may be provided by e.g., a smartphone or a vehicle.

In a further embodiment of the vehicle module, the timer comprises a time synchronized clock configured to track a current time, such that the moment of time of parking is the local time of the vehicle.

In one aspect, the time synchronized clock may be a simple hours, minutes and seconds clock wherein the current time is synchronized by a user, e.g. through a user control or a connected phone, by setting the current time of the timer to the current time of day as indicated by a watch or another clock. In another aspect, the time synchronized clock may be configured to receive a radio signal signaling the current time in order to perform time synchronization, e.g. as used in wall clocks, sleep alarms, watches and weather stations.

In one aspect, the time synchronized clock may be configured to make clock adjustments to account for summertime and wintertime. In another aspect, the controller may round off the current time to the nearest five- or fifteen-minute interval when determining the time of parking as the vehicle becomes stationary.

One advantage of using the current time for the parking data is that the remote server does not need to calculate when the parking data was received in order to determine the exact moment in time which the vehicle was parked.

In a further embodiment of the vehicle module, the communication module is configured to transmit the parking data after the sensor has transmitted a status of the vehicle being stationary for at least 1 to 120 seconds, or 20 to 100 seconds, or 40 to 80 seconds, or at least 60 seconds.

One advantage of requiring the vehicle to be stationary within the given time range is that the controller and the communication module does not waste energy generating the parking data parking and transmitting the parking data and the vehicle ID to the remote server while the vehicle is e.g. stopped at an intersection or during slow traffic. Furthermore, the remote server also does not waste energy in the same scenarios. In another aspect, the vehicle module may be configured to delay the generation of the parking data until after the time limit to save further power.

In certain regions, traffic laws dictate that a vehicle is parked after having been stopped for three minutes or more. Hence, the vehicle module should generally not delay the generation and/or transmission for more than three minutes, as this may result in a parking fine being imposed to the vehicle.

In one aspect, where a smartphone is configured to communicate with the vehicle module and the communication module transmits the parking data to the smartphone so that the smartphone can transmit the parking data to the remote server, the smartphone may be configured to await transmission to the remote server until the expiry of the time range for a delayed transmission. The vehicle module may be configured to instantly transmit the parking data to the smartphone as it is generated, so that if the smartphone loses connection to the vehicle module, e.g. because it is out of range of the vehicle module, the smartphone may be configured to transmit parking data to the remote server after a time period has passed since the smartphone received the parking data.

In a further embodiment of the vehicle module, the vehicle module is integrated into a central computer system of the vehicle wherein the status is generated by the central computer system when the vehicle is moving or stationary.

In general, modern cars comprise a central computer system comprising a processor capable of interacting with a plurality of sensors and electronic equipment in the car. The central computer system is generally capable of controlling an information and entertainment system in the vehicle, which is usually centered around a medium to large touchscreen. Additionally, the central computer system is able to wirelessly communicate through an integrated telephone, short message service (SMS) and/or mobile internet connection, and/or communicate with a smartphone device wired or wirelessly. Furthermore, the one or more sensors of the vehicle which the central computer system is connected to may be used to obtain e.g. a status related to the movement of the vehicle, whether the engine of the vehicle is running and/or whether a parking brake is actuated.

In one aspect, the vehicle module may be integrated into the central computer system by being provided as a software application which is run by the central computer system. In this aspect, the communication module may also be implemented by the central computer system by being configured to transmit the parking data and vehicle ID to the remote server through an integrated telephone, SMS and/or mobile internet connection or by transmitting the parking data and vehicle ID to a smartphone which relays the transmission to the remote server.

One advantage of implementing the vehicle module on a central computer system is that one or more sensors suitable for providing the status are readily available. A further advantage is that any demands for a software application in terms of processing and storage of data relating to the time of parking, parking data and vehicle ID is very low, hence making it easy to run the software application on a broad range of modern vehicles. Furthermore, the software application is relatively easy to implement in code, hence it will also be easy to implement for a wide range of different central computer systems and coding languages. Hence, a further advantage of easily being able to implement the vehicle module in a broad range of modern vehicles is that a system of central registration of time of parking of vehicles will be widely adopted at a faster rate.

In a further embodiment of the vehicle module, the sensor is embedded in the vehicle and the sensor is configured to transmit the status from the vehicle to the vehicle module.

In one aspect, the sensor embedded in the vehicle may be connected to the vehicle module by connecting the vehicle module to a diagnostic port arranged in the vehicle or to an on-board diagnostics (OBD) interface. In another aspect, the vehicle module may be powered by a power supply arranged in the vehicle, e.g. the car battery or power generator. In a further aspect, the vehicle module may comprise a battery wherein the battery is charged by the power supply of the vehicle.

In one aspect, the sensor embedded in the vehicle may be a start-stop sensor, a parking brake sensor, a wheel rotation sensor, an engine on/off sensor or a speed sensor and the sensor may be configured for outputting a status indicating whether the vehicle is moving or stationary.

In another aspect, the sensor embedded in the vehicle may transmit the sensor data such as the driving speed to the vehicle module, wherein the controller is configured to determine from the sensor data the status indicating whether the vehicle is moving or stationary.

In one aspect, the vehicle module may be embedded into an OBD-dongle, wherein the OBD-dongle may receive sensor data from one or more sensors embedded in the vehicle and/or power from the vehicle. Furthermore, the OBD-dongle may also have wireless communication such as a telephone service, SMS and/or a mobile internet connection such as GSM, 3G, 4G, 5G, etc.

One advantage of utilizing a sensor embedded in the vehicle is that the vehicle module is easier to provide as it does not require a sensor, and the sensor embedded in the vehicle may provide a greater accuracy in terms of only detecting parking instances and not braking or stopping instances. Hence, a further advantage is that the vehicle module will require less power as it only needs to perform fewer actions.

In a further embodiment of the vehicle module, the communication module is configured to transmit the parking data and the vehicle ID to a smartphone, wherein the smartphone is configured to transmit the parking data and vehicle ID to the remote server.

In one aspect, the communication module may transmit data to the smartphone via a standardized communication protocol such as via Bluetooth, Wi-Fi and/or Bluetooth low energy. The smartphone may be configured to transmit the parking data and vehicle ID to the remote server through a telephone service, SMS and/or a mobile internet connection such as GSM, 3G, 4G, 5G, etc.

In another aspect, the smartphone may be configured to track and display the time interval since parking, so that the user of the smartphone is aware of the time interval. Furthermore, the smartphone may be configured with an alarm, wherein the user is able to insert a given parking period limit, so that the alarm alerts the user when the time interval since parking is close to exceeding and/or has exceeded the parking period limit. In a further aspect, the smartphone may be configured with a localization unit configured to determine the location of the smartphone during parking of the vehicle or during reception of the parking data and vehicle ID from the vehicle module. The determined smartphone location may be used to automatically detect a parking period limit which may be transmitted to the alarm.

Several scenarios may occur wherein the smartphone belonging to the user or owner of the vehicle is unable to transmit the parking data and vehicle ID to the remote server because the user or owner may leave the vehicle too quickly; or their smartphone is not able to communicate with the vehicle module; or their smartphone may not be able to transmit the parking time and vehicle ID to the remote server; or any other similar scenario. Hence, the vehicle module may be configured to communicate with any smartphone with a dedicated software application for communicating with the vehicle module, wherein the software application may be configured for receiving the parking data and vehicle ID from the vehicle module when in range of the vehicle module so that any smartphone operated by a person other than the user or owner of the vehicle can transmit the parking data and vehicle ID to the remote server. One advantage of this is that the correct time of parking of the vehicle can still be registered although the owner or the user of the vehicle is unable to relay transmission of the parking data and vehicle ID to the remote server.

A further objective of the invention is achieved by a scanner for retrieving a time of parking of a vehicle, wherein the scanner comprises:
- a camera configured to scan a license plate (LP) of the vehicle;
- a communication module configured to transmit the LP to a remote server and to receive the time of parking of the vehicle associated with the LP from the remote server; and
- a display unit configured to display data related to the time of parking and/or the LP.

The scanner may be used by a parking enforcement officer to easily scan a vehicle and retrieve the time of parking of the scanned vehicle. Hence, the scanner is advantageous in that the parking enforcement officer does not need to spend time moving around each vehicle to read manual or electronic parking discs.

In one aspect, the camera may be configured to capture an image of the license plate, the image is analysed to automatically extract the letters and digits of the license plate as a text string. In a further aspect, the camera automatically scans a live image and extracts the letters and digits of the license plate using an image recognition algorithm. In another aspect, the scanner may be configured to scan a barcode and/or a QR-code in addition to license plates.

The data related to the time of parking may e.g., be the time interval since the parking was initiated and/or the exact time of day of which the vehicle was parked.

In one aspect, the scanner may be configured for connecting to a printer unit configured for printing a parking fine, wherein the scanner can automatically generate text for the parking fine comprising e.g., the license plate, time of scanning the vehicle and the time interval since parking or exact time of day of the parking.

In a further embodiment of the scanner, the communication module is configured to receive parking data and an associated vehicle ID from a communication module of a vehicle module installed in a vehicle, wherein the scanner is configured to transmit the received data to the remote server.

In one scenario, a vehicle module may not have been able to transmit the parking data and vehicle ID to the remote server due to one or more reasons as disclosed in the prior description of the invention. Hence, when the scanner is used to retrieve the parking data associated with the scanned vehicle from the remote server, the retrieval will likely fail or result in erroneous parking data. In such a scenario, the communication module of the scanner is configured to communicate with a communication module of a vehicle module, wherein the parking data and vehicle ID is transmitted to the scanner so that the scanner can transmit the parking data and vehicle ID to the remote server. Now the scanner is able to properly retrieve and/or display the correct parking data for the scanned vehicle.

In a further embodiment of the scanner, the scanner comprises a localization unit configured to determine the location of the scanner and the scanner's display unit is configured to display if a scanned vehicle exceeds a parking period limit at the location of the scanner.

In one aspect, the scanner may be provided with a local map and/or global map comprising a plurality of parking zones or areas with one or more different parking period limits. The map may be used for determining which parking period limit the scanner is located in, so that the parking period limit can be used for determining whether the parking time of the scanned vehicle exceeds the parking period limit. In another aspect, the scanner comprises a list of coordinates defining a plurality of parking zones or areas and the list of coordinates also comprises parking period limits.

In one aspect, the remote server may store one or more parking permits associated with a vehicle ID, parking permits may be e.g. resident licenses, working licenses, or parking cards for people with disabilities. The parking permits may be transmitted to the scanner and transmitted on the display unit, so that a parking enforcement officer can take the permit into account for specific or all parking zones or areas.

In a further embodiment of the scanner, the scanner is implemented on a smartphone.

One advantage of implementing the scanner on a smartphone is that smartphones comprise all electronic hardware such as communication module, camera and display unit. Furthermore, the smartphone also comprises storage medium and general-purpose processors enabling a software application to be installed and configured to perform the functions of the scanner.

A further advantage of using smartphones to perform the functions of the scanner is that smartphones are readily available and generally most parking enforcement officers are equipped with a work or private smartphone.

A further objective of the invention is achieved by a distributed system for central registration and retrieval of a time of parking of a plurality of vehicles with associated vehicle IDs, wherein the system comprises:
- a remote server configured to store the time of parking of the vehicle and the vehicle ID associated with the vehicle;
- a vehicle module according to any of the herein disclosed embodiments configured to automatically generate the time of parking and transmit the time of parking and the vehicle ID to the remote server when the vehicle is parked; and
- a scanner according to any of the herein disclosed embodiments configured to receive and display the time of parking received from the remote server by scanning a license plate (LP) of a vehicle and transmitting the LP to the remote server.

The distributed system may comprise a plurality of vehicle modules, each installed in a vehicle; a plurality of scanners each used by a parking enforcement officer; and/or one or more remote servers, wherein each server may be configured to cover a region such as a country or state.

In one aspect, the time of parking transmitted between the vehicle module and the remote server and between the remote server and the scanner may be the parking data as disclosed in the present description of the invention. The parking data may comprise a time interval since parking the vehicle and/or an exact time of day on which the vehicle was parked.

In a further embodiment of the distributed system, the remote server is configured to store a list of vehicle IDs associated with the LPs, so that the scanner can receive the correct time of parking associated with the LP of the scanned vehicle.

One advantage of the fact that the vehicle module transmits a vehicle ID which may be randomly generated is that the vehicle ID cannot be used to identify the vehicle which the vehicle module is installed in. Hence, if a person with malicious intent were to eavesdrop a data transmission from a vehicle module, the person cannot use the vehicle ID to identify which vehicle has the associated parking data. As such the distributed system may be compliant with data privacy protection policies.

A further objective of the invention is achieved by a method for central registration and retrieval of a time of parking of a plurality of vehicles, wherein the method comprises steps of:
- detecting automatically the time of parking when a vehicle is stationary;
- transmitting the time of parking and a vehicle ID associated with the vehicle to a remote server;
- scanning a license plate (LP) associated with the vehicle with a scanner;
- transmitting the LP to the remote server; and
- receiving the time of parking associated with the vehicle from the remote server.

The step of detecting the time of parking and transmitting the time of parking and the vehicle ID to the remote server may be carried out by a vehicle module according to the herein disclosed embodiments, wherein a vehicle module is arranged in each vehicle of the plurality of vehicles.

The step of scanning and transmitting the license plate and receiving the time of parking may be carried out by one or more scanners according to the herein disclosed embodiments.

In one aspect, the method may comprise additional steps which may be carried out by the remote server:
- providing a list of vehicle IDs associated with a respective license plate associated with the vehicle of the vehicle ID;
- receiving a transmission of the time of parking and vehicle ID;
- storing the received time of parking in the list of vehicle IDs for the received vehicle ID;
- receiving a transmitted license plate and a request to provide a vehicle ID and/or time of parking;
- transmitting the time of parking and vehicle ID associated with the received license plate.

### Description of the Drawing

Various examples are described hereinafter with reference to the figures. The reference numerals refer to the elements throughout. The elements will, thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example need not have all the aspects or advantages shown. An aspect or an advantage described in conjunction with a particular example is not necessarily limited to that example and can be practiced in any other examples even if not so illustrated, or if not so explicitly described.

Exemplary embodiments of the invention are described in the figures, wherein:
- Fig. 1a: illustrates one embodiment of a vehicle module
- Fig. 1b: illustrates one further embodiment of a vehicle module
- Fig. 2: illustrates one embodiment of vehicle module integrated into a vehicle
- Fig. 3a: illustrates one embodiment of a scanner
- Fig. 3b: illustrates one further embodiment of a scanner
- Fig. 4: illustrates one embodiment of distributed system
- Fig. 5a: illustrates one embodiment of method
- Fig. 5b: illustrates one further aspect of the method

### Detailed Description of the Invention

Exemplary embodiments will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects.

Throughout the specification, when an element is referred to as being "connected" to another element, the element is "directly connected" to the other element, "electrically connected", "fluidically connected" or "communicatively connected" to the other element with one or more intervening elements interposed there between.

The terminology used herein is for the purpose of describing particular examples only and is not intended to be limiting. As used herein, the terms "comprises" "comprising" "includes" and/or "including" when used in this specification specify the presence of stated features, integers, steps, operations, elements, and/or components, but do not preclude the presence or addition of one or more other features, integers, steps, operations, elements, components, and/or groups thereof.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

In the drawings, the dashed lines and dashed boxes indicate one or more further embodiments or aspects of the one or more parts of the invention. Any given part of the invention may comprise one or more of the further embodiments and/or aspects, i.e., a combination of several further embodiments and/or aspects.

| **Reference:** | **Reference number:** |
|---|---|
| Distributed system | 1 |
| Vehicle module | 10 |
| Method | 100 |
| Timer | 11 |
| Detecting | 110 |
| Time synchronized clock | 111 |
| Data | 12 |
| Transmitting | 120 |
| Current time | 121 |
| Sensor | 13 |
| Scanning | 130 |
| Vehicle sensor | 131 |
| Status | 14 |
| Transmitting | 140 |
| Controller | 15 |
| Receiving | 150 |
| Processor | 16 |
| Data storage medium | 17 |
| Communication module | 18 |
| Parking data | 19 |
| Vehicle | 20 |
| Vehicle ID | 21 |
| Time of parking | 22 |
| Moment of time of parking | 23 |
| Time interval since parking | 24 |
| License plate (LP) | 25 |
| Central computer system | 26 |
| Remote server | 30 |
| Smartphone | 40 |
| Scanner | 50 |
| Camera | 51 |
| Localization unit | 52 |
| Communication module | 58 |
| Display unit | 59 |

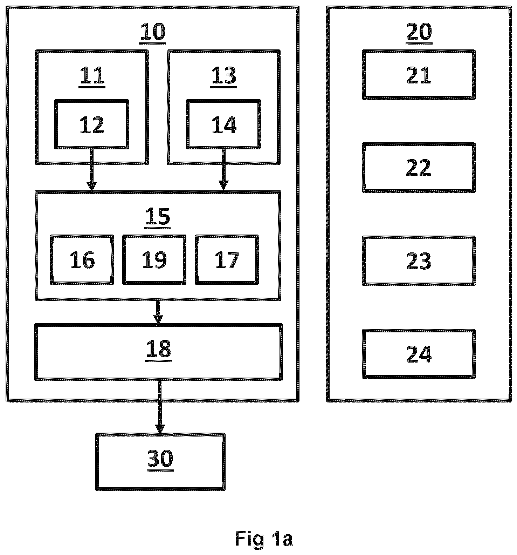

Figure 1a illustrates one embodiment of a vehicle module 10 for central registration of a time of parking 22 of a vehicle 20 with an associated vehicle ID 21 on a remote server 30.

The vehicle module comprises a timer 11, a sensor 13, a controller 15 and a communication module 18. The timer 11 is configured to transmit data 12 relating to the time of parking 22 of the vehicle 20. The data 12 is transmitted to the controller 15. The sensor 13 is configured to detect at least two statuses 14 and transmit the statuses to the controller 15. The two statuses 14 indicate whether the vehicle 20 is a moving vehicle or a stationary vehicle.

The controller 15 comprises a processor 16 and data storage medium 17 and the controller 15 is configured to receive the data 12 relating to the time of parking 22 from the timer 11 and the status 14 from the sensor 13. The controller 15 is configured to generate parking data 19 related to a moment of time of parking 23 of the vehicle 20 or a time interval since parking 24 the vehicle based on the received data 12 and a change of the status from moving to stationary. Although the moment of time of parking 23 and the time interval since parking 24 are both generated by the controller 15, the two objects are drawn under the vehicle 20 as both are associated with the parking of the vehicle 20, similar to how the vehicle ID 21 is associated with each vehicle 20 which the vehicle module 10 is installed into.

The communication module 18 is configured to transmit the generated parking data 19 and a vehicle ID 21 associated with the vehicle 20 to a remote server 30. The vehicle ID 21 may be a unique string of numbers and/or letters used to identify a given vehicle 20. The vehicle ID 21 may be stored in the data storage medium 17 of the controller 15.

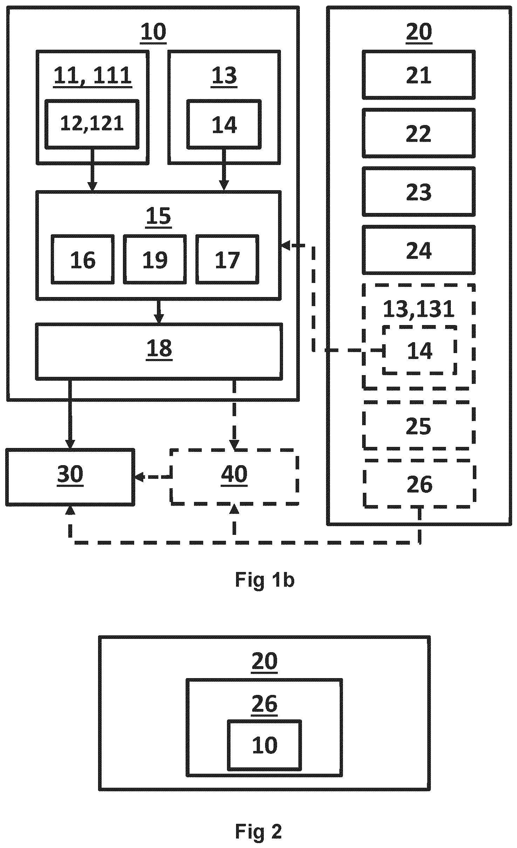

Figure 1b illustrates further embodiments of the vehicle module 10 and vehicle 20 as described in figure 1a.

In a further aspect of the vehicle module 10, the timer 11 may comprise a time synchronized clock 111 configured to track a current time 121, enabling the generated moment of time of parking 23 to be the local time of the vehicle 20 at the time the vehicle 20 is parked.

In another aspect, the communication module 18 may be configured to transmit the generated parking data 19 and the vehicle ID 21 to a smartphone 40, wherein the smartphone 40 is configured to relay the transmission to the remote server 30. In one aspect, the smartphone 40 may require a software application in order to facilitate communication with the communication module 18.

In another aspect, the sensor 13 may be embedded in the vehicle 20, wherein the sensor 13 is configured to transmit the status 14 from the vehicle 20 to the vehicle module 10 and wherein the status indicates a stationary vehicle and moving vehicle. Hence, the embedded sensor may be a vehicle sensor 131, wherein the vehicle sensor 131 may be any suitable existing sensor installed in the vehicle by the vehicle manufacturer, e.g., a speed sensor, a parking brake sensor, etc.

In a further aspect, the vehicle module 10 may be integrated into a central computer system 26 of the vehicle 20 (as also illustrated in fig. 2) wherein a plurality of the hardware and functions of the vehicle module 10 may be a part of the hardware of the central computer system 26, or peripheral hardware of the vehicle 20 and/or may be performed by running a software application on the central computer system 26. For example, the sensor 13 and generation of the status 14 may be performed by the aforementioned vehicle sensor 131 or by receiving sensor data from one or more sensors of the vehicle 20. Furthermore, the functions of the controller 15 such as generating the parking data 19 and/or the communication module 18 transmitting the parking data 19 and the vehicle ID 21 to a remote server 30 and/or a smartphone 40 may also be carried out on the central computer system 26.

Figure 2 illustrates a further embodiment of the vehicle module 10, wherein the vehicle module is integrated into a central computer system 26 of a vehicle 20. This embodiment is similar to the disclosure of the further aspects of the central computer system 26 in fig. 1b.

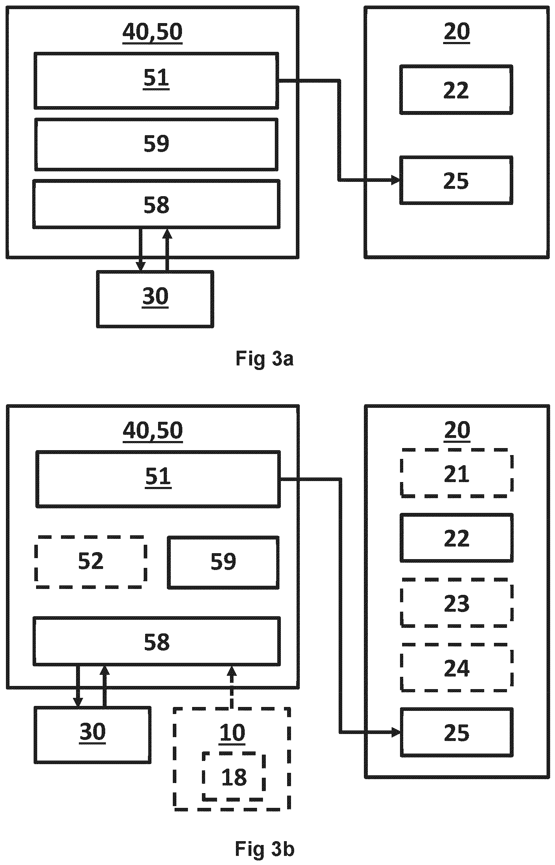

Figure 3a illustrates one embodiment of a scanner 50 for retrieving a time of parking 22 of a vehicle 20, wherein the scanner 50 comprises a camera 51, a communication module 58 and a display unit 59. The camera 51 is configured to scan a license plate 25 arranged on the vehicle 20 to obtain letters and digits of the license plate 25. The communication module 58 is configured to transmit the scanned license plate 25 to a remote server 30 and the communication module 58 is configured to receive a time of parking 22 of the vehicle 20 and/or a vehicle ID associated with the license plate 25. The display unit 59 is configured to display data related to the time of parking 22 and/or the license plate 25.

Hence, the scanner 50 enables a parking enforcement officer to easily scan a vehicle's 20 license pate 25 with the scanner 50 and thereby retrieve from the remote server 30 a time of parking 22, wherein data related to the time of parking 22 is displayed on the display unit 59 of the scanner 50.

Figure 3b illustrates a further embodiment of the scanner 50, wherein the scanner may be implemented on a smartphone 40.

In a further embodiment of the scanner 50, the scanner 50 comprises a localization unit 52 configured to determine the location of the scanner 50. The scanner may be configured to use the location of the scanner to determine a parking period limit at the location of the scanner. When a vehicle 20 is scanned in a specific location as determined by the localization unit 52, the scanner 50 is configured to determine whether the time of parking 22 of the scanned vehicle exceeds the parking period limit at the location of the scanner 50. The display unit 59 may be configured to display the parking period limit and/or whether the scanned vehicle is in violation of the parking period limit.

In a further embodiment of the scanner 50, the communication unit 58 may be configured to communicate with a communication module 18 of a vehicle module 10 arranged in a vehicle 20, wherein the communication module 18 transmits parking data and an associated vehicle ID 21 to the scanner's 50 communication module 58. The scanner 50 may be further configured to transmit the received parking data and the vehicle ID 21 to the remote server 30.

In one aspect, the time of parking 22 may be the moment of time of parking 23 of the vehicle 20, i.e., the exact time of day. In another aspect, the time of parking may be a time interval since parking 24 the vehicle 20.

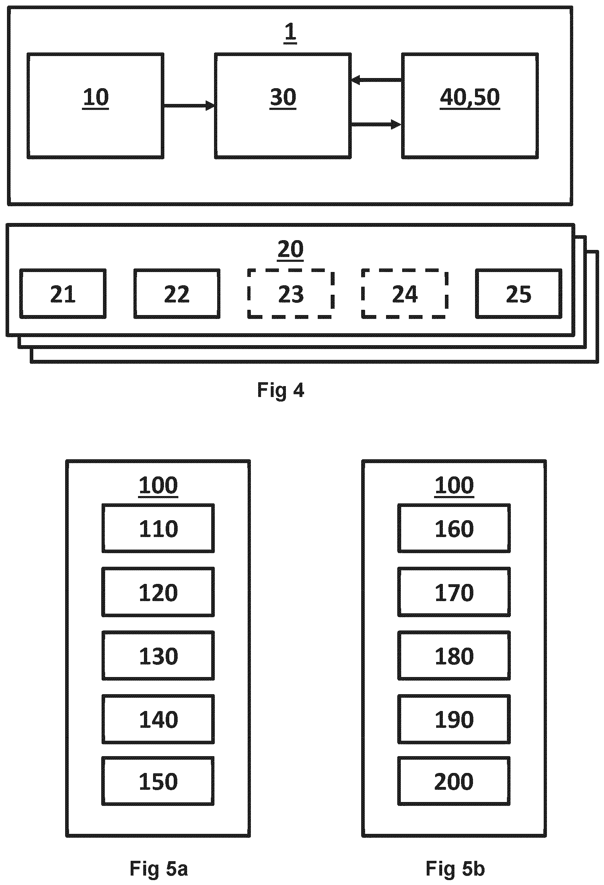

Figure 4 illustrates one embodiment of a distributed system 1 for central registration and retrieval of a time of parking 22 of a plurality of vehicles 20 with associated vehicle IDs 21.

The distributed system 1 comprises a remote server 30 configured to store the time of parking 22 of the vehicle 20 and the vehicle ID 21 associated with the vehicle 20. The time of parking 22 and the vehicle ID 21 may be transmitted to the remote server 30 by a vehicle module 10, a central computer system 26 of the vehicle 20, a smartphone 40 and/or a scanner 50.

The distributed system 1 further comprises a vehicle module 10 arranged in each vehicle 20, wherein the vehicle module 10 is configured to automatically generate the time of parking 22 when the vehicle 20 is parked and transmit the time of parking 22 and vehicle ID 21 associated with the vehicle 20 to the remote server 30. The vehicle module 10 may be according to any one of the embodiments illustrated in fig. 1a and 1b.

The distributed system 1 further comprises a scanner 50 configured to receive from the remote server 30 the time of parking 22 and display the time of parking 22 of a scanned vehicle. The scanned vehicle is the vehicle 20 which the scanner 50 has scanned a license plate 25 of. As described in fig. 3b, the scanner 50 may be implemented on a smartphone 40.

In one aspect, the time of parking 22 may be a moment of time of parking 23 of the vehicle 20, i.e., the exact time of day. In another aspect, the time of parking may be a time interval since parking 24 the vehicle 20.

Figure 5a illustrates one embodiment of a method 100 for central registration and retrieval of a time of parking of a plurality of vehicles, comprising the steps of:
- detecting 110 automatically the time of parking when a vehicle is stationary;
- transmitting 120 the time of parking and a vehicle ID associated with the vehicle to a remote server;
- scanning 130 a license plate associated with the vehicle with a scanner;
- transmitting 140 the license plate to the remote server; and
- receiving 150 the time of parking associated with the vehicle from the remote server.

Figure 5b illustrates a further aspect of the method 100, wherein the method 100 may comprise additional steps which may be carried out by the remote server:
- providing 160 a list of vehicle IDs associated with a respective license plate associated with the vehicle of the vehicle ID;
- receiving 170 a transmission of the time of parking and vehicle ID;
- storing 180 the received time of parking in the list of vehicle IDs for the received vehicle ID;
- receiving 190 a transmitted license plate and a request to provide a vehicle ID and/or time of parking;
- transmitting 200 the time of parking and vehicle ID associated with the received license plate.

## Claims

1. A vehicle module (10) for central registration of a time of parking (22) of a vehicle (20) with an associated vehicle ID (21) on a remote server (30), wherein the vehicle module (10) comprises:
- a timer (11) configured to transmit data (12) relating to the time of parking (22);
- a sensor (13) configured to detect a status (14) of the vehicle (20), the status being moving or stationary, said sensor being configured to transmit the detected status;
- a controller (15) with a processor (16) and data storage medium (17), said controller is configured to store the vehicle ID (21) and configured to receive the transmitted data (12) from the timer (11), to receive the detected status (14) from the sensor (13) and to generate parking data (19) based on the received data (12) and a change of status from moving to stationary, and
- a communication module (18) configured to transmit the generated parking data (19) and the vehicle ID (21) to a remote server (30),
wherein said parking data (19) being a moment of time of parking (23) or a time interval since parking (24).

2. The vehicle module (10) according to claim 1, wherein the timer (11) comprises a time synchronized clock (111) configured to track a current time (121), such that the moment of time of parking (23) is the local time of the vehicle (20).

3. The vehicle module (10) according to claim 1 or 2, wherein the communication module (18) is configured to transmit the parking data (19) after the sensor (13) has transmitted a status (14) of the vehicle being stationary for at least 1 to 120 seconds, or 20 to 100 seconds, or 40 to 80 seconds, or at least 60 seconds.

4. The vehicle module (10) according to any one of claims 1 to 3, wherein the vehicle module (10) is integrated into a central computer system (26) of the vehicle (20) and wherein the status (14) is generated by the central computer system (25) when the vehicle is moving or stationary.

5. The vehicle module (10) according to any one of claims 1 to 3, wherein the sensor (13) is embedded in the vehicle (20) and the sensor is configured to transmit the status (14) from the vehicle to the vehicle module (10).

6. The vehicle module (10) according to any one of claims 1 to 5, wherein the communication module (18) is configured to transmit the parking data (19) and the vehicle ID (21) to a smartphone (40), wherein the smartphone (40) is configured to transmit the parking data and vehicle ID to the remote server (30).

7. A scanner (50) for retrieving the time of parking (22) of a vehicle (20), wherein the scanner (50) comprises:
- a camera (51) configured to scan a license plate (LP) (25) of the vehicle (20);
- a communication module (58) configured to transmit the LP (25) to a remote server (30) and to receive the time of parking (22) of the vehicle associated with the LP from the remote server; and
- a display unit (59) configured to display data related to the time of parking (22) and/or the LP (25).

8. The scanner (50) according to claim 7, wherein the communication module (58) is configured to receive parking data (19) and an associated vehicle ID (21) from a communication module (18) of a vehicle module (10) installed in a vehicle (20), wherein the scanner is configured to transmit the received data to the remote server (30).

9. The scanner (50) according to claim 7 or 8, wherein the scanner (50) comprises a localization unit (52) configured to determine the location of the scanner and wherein the scanner (50) is configured to display if a scanned vehicle (20) exceeds a parking period limit at the location of the scanner.

10. The scanner (50) according to any one of claims 7 to 9, wherein the scanner (50) is implemented on a smartphone (40).

11. A distributed system (1) for central registration and retrieval of the time of parking (22) of a plurality of vehicles (20) with associated vehicle IDs (21), wherein the distributed system comprises:
- a remote server (30) configured to store the time of parking (22) of the vehicle (20) and the vehicle ID (21) associated with the vehicle (20);
- a vehicle module (10) according to any one of claims 1 to 6 configured to automatically generate the time of parking (22) and transmit the time of parking and the vehicle ID to the remote server (30) when the vehicle (20) is parked; and
- a scanner (50) according to any one of claims 7 to 10 configured to receive and display the time of parking (22) received from the remote server (30) by scanning a license plate (LP) (25) of a vehicle (20) and transmitting the LP to the remote server (30).

12. The distributed system (1) according to claim 11, wherein the remote server (30) is configured to store a list of vehicle IDs (21) associated with the LPs (25), so that the scanner (50) can receive the correct time of parking (22) associated with the LP of the scanned vehicle (20).

13. A method (100) for central registration and retrieval of the time of parking (22) of a plurality of vehicles (20), wherein the method comprises steps of:
- detecting (110) automatically the time of parking (22) when a vehicle (20) is stationary;
- transmitting (120) the time of parking and a vehicle ID (21) associated with the vehicle to a remote server (30);
- scanning (130) a license plate (LP) (25) associated with the vehicle (20) with a scanner (50);
- transmitting (140) the LP (25) to the remote server (30); and
- receiving (150) the time of parking (22) associated with the vehicle from the remote server.
